# EUROPEAN PATENT APPLICATION

(11) **EP 4 793 387 A1**
(43) Date of publication of application: **19.08.2026**
(21) Application number: 24912638.4
(22) Date of filing: 19.12.2024
(51) Int. Cl.: C22C 38/00, C22C 38/14, C22C 38/60, H01F 1/147, C21D 8/12, C21D 9/46

(54) **GRAIN-ORIENTED ELECTRICAL STEEL SHEET**

(30) Priority: 28.12.2023 JP 2023223485
(71) Applicant: JFE Steel Corporation, Tokyo 100-0011 (JP)
(72) Inventor: TAKAHASHI Mari, Tokyo 100-0011 (JP); IMAMURA Takeshi, Tokyo 100-0011 (JP); TAKENAKA Masanori, Tokyo 100-0011 (JP)
(74) Representative: Hoffmann Eitle
(86) International application number: PCT/JP2024/045060
(87) International publication number: WO 2025/142749

(57) **Abstract**

Provided is a grain-oriented electrical steel sheet having magnetic properties that can sufficiently control the building factor. The grain-oriented electrical steel sheet includes a base film and an insulating coating in this order on the surface of a base steel sheet containing at least La: 0.0001 % to 0.0200 %, wherein Ti content in the steel sheet is 0.0050 % to 0.1500 %, and a ratio R17 of Wh₁₇ to W_{17/50} and a ratio R18 of Wh₁₈ to W_{18/50} satisfy R18/R17 ≤ 1.50.

## Description

### TECHNICAL FIELD

The present disclosure relates to grain-oriented electrical steel sheets, and more particularly to a grain-oriented electrical steel sheet suitable for use as an iron core material for a transformer.

### BACKGROUND

Grain-oriented electrical steel sheets are soft magnetic materials used as iron core materials for transformers, and have crystal microstructures in which the <001> orientation, which is an easy magnetization axis of iron, is highly accorded with the rolling direction of the steel sheets. Such texture is formed through a phenomenon called secondary recrystallization where crystal grains with {110}<001> orientation, also known as Goss orientation, grow preferentially to large sizes during purification annealing in the process of producing a grain-oriented electrical steel sheet.

A typical technique used for such a production process causes grains having Goss orientation to undergo secondary recrystallization during purification annealing using precipitates called inhibitors. For example, Patent Literature (PTL) 1 describes a method using AlN, PTL 2 describes a method using MnS and MnSe, and both of these methods have been put into industrial use.

These methods using inhibitors are useful for stable growth of secondary recrystallized grains, but for the purpose of fine particle distribution of the inhibitors into the steel, slab heating at high temperatures of 1300 °C or more is necessary to dissolve the inhibitor components in solid solution.

On the other hand, for a material containing no inhibitor components, a technique for developing crystal grains with Goss orientation through secondary recrystallization is described in PTL 3, for example. This technique eliminates impurities such as inhibitor components as much as possible and elicits the dependency of grain boundary energy of primary recrystallized grains on the grain boundary misorientation angle, thus causing the secondary recrystallization of grains with Goss orientation without using inhibitors. This effect is called the texture inhibition effect. This method does not require inhibitor to be finely dispersed in the steel. Therefore, this method has great advantages in terms of costs and maintenance, such as not requiring high-temperature slab heating, which is essential in methods using inhibitors.

Grain-oriented electrical steel sheets, which are mainly used as iron cores of transformers, are required to have excellent magnetization properties, in particular low iron loss. To achieve this, it is important to highly align the secondary recrystallized grains in a steel sheet to the Goss orientation and to decrease impurities in the product sheet.

Further, techniques have been developed for introducing nonuniformity to the steel sheet surfaces by physical means to subdivide magnetic domain width for less iron loss, namely, magnetic domain refining techniques. For example, in PTL 4, a technique is proposed of irradiating a steel sheet after final annealing with a laser to introduce high-dislocation density regions into a surface layer of the steel sheet, thereby narrowing magnetic domain widths and decreasing iron loss of the steel sheet. Further, in PTL 5, a technique is proposed of controlling magnetic domain widths by electron beam irradiation.

Hysteresis loss can be decreased by aligning the orientation after secondary recrystallization to a high degree with the Goss orientation and by decreasing impurities. In contrast, eddy current loss is mainly decreased when magnetic domain refining techniques are applied.

### CITATION LIST

### Patent Literature

PTL 1: JP S40-15644 B1
PTL 2: JP S51-13469 B2
PTL 3: JP 2000-129356 A
PTL 4: JP S57-2252 B2
PTL 5: JP H06-72266 B2

### SUMMARY

### (Technical Problem)

As mentioned above, grain-oriented electrical steel sheets are mainly used as the iron cores of transformers. In general, there is a discrepancy between the iron loss value of a transformer iron core and the iron loss value of a grain-oriented electrical steel sheet that is a material of the iron core, and the iron loss is greater for the transformer iron core. The iron loss ratio between these two is called the building factor. That is, even when the iron loss of the material is low, when the building factor is high, the iron loss of the transformer iron core is large, creating a problem of insufficient performance.

In the carbon-neutral era, what needs to be decreased is the iron loss of the final product, the transformer. No matter how low the iron loss of the material is, it is meaningless when the building factor is high. The building factor is affected not only by transformer design but also by material properties, and therefore lowering the building factor as well as the iron loss of the material is desired.

That is, it would be helpful to provide a grain-oriented electrical steel sheet having magnetic properties that can sufficiently control the building factor.

### (Solution to Problem)

As a result of intensive studies, when forming a base film that is mainly forsterite and an insulating coating on a base steel sheet, the inventors have focused on La content in the base steel sheet and Ti content in the grain-oriented electrical steel sheet as a whole after the base film and the insulating coating have been formed. The inventors have found that by controlling the La content and the Ti content in particular within defined ranges and satisfying a defined expression (1), it is possible to obtain a grain-oriented electrical steel sheet that can exhibit a low building factor.

The following describes the experiments that successfully led to the present disclosure. Hereinafter, any numerical range expressed using "to" means a range that includes the numerical values before and after "to" as the lower limit value and the upper limit value, respectively.

### <Experiment 1>

In order to vary mainly the La content in the base steel sheet, steel slabs were produced by continuous casting to contain, in mass%, La: 0 % to 0.0210 %, C: 0.050 % to 0.081 %, Si: 3.1 % to 3.3 %, Mn: 0.07 % to 0.10 %, Al: 0.020 % to 0.025 %, N: 0.0069 % to 0.0085 %, S: 0.0011 % to 0.0031 %, Sb: 0.025 % to 0.036 %, Ti: 0.008 % to 0.009 %, and Co: 0.0030 % to 0.0040 %, with the balance being Fe and inevitable impurity. Each steel slab was subjected to slab heating by soaking at 1400 °C for 20 min, and then hot rolled to a hot-rolled sheet having a thickness of 2.4 mm. The hot-rolled sheet was then subjected to hot-rolled sheet annealing at 1000 °C for 30 s in N₂ atmosphere. The annealed hot-rolled sheet was then cold rolled to an intermediate cold-rolled sheet thickness of 1.5 mm, and further subjected to intermediate annealing at 1000 °C for 100 s in a 25 % H₂, 75 % N₂ atmosphere. The annealed intermediate cold-rolled sheet was then cold rolled to a cold-rolled sheet having a thickness of 0.23 mm. This cold-rolled sheet was subjected to decarburization annealing at 850 °C for 150 s in a 50 % H₂, 50 % N₂ wet atmosphere with a dew point of 50 °C. Further, an annealing separator mainly composed of MgO was applied to surfaces (both sides) of the obtained decarburized annealed sheet, and purification annealing was carried out by holding at 1200 °C for 10 h, forming the base film mainly composed of forsterite. At this time, the heating rate was 20 °C/h up to 1200 °C. Further, during the heating process, N₂ atmosphere was used from room temperature to 700 °C, atmospheres with various N₂ and H₂ mixture ratios were used from above 700 °C to 1100 °C, and H₂ atmosphere was used from above 1100 °C to 1200 °C. Further, H₂ atmosphere was used during the hold time, and Ar atmosphere was used during cooling.

A coating liquid was then applied to the resulting steel sheet to form an insulating coating on the base film.

The grain-oriented electrical steel sheets thereby obtained, in which a base film mainly composed of forsterite (forsterite film) and an insulating coating were formed in this order on the surfaces of the base steel sheet, were used as samples. Then, for these samples, iron losses W_{17/50} and W_{18/50} (iron losses when magnetized to 1.7 T and 1.8 T, respectively, at 50 Hz) and the hysteresis losses Wh₁₇ and Wh₁₈ (hysteresis losses when magnetized to 1.7 T and 1.8 T, respectively) were measured using the method described in JIS C2550-1.

Further, to measure the La content in the base steel sheet, a portion of an obtained samples were immersed in a 10 % hydrochloric acid aqueous solution at 80 °C for 180 s to remove the base film and the insulating coating, and the La content was measured in accordance with the method described in Tanabe I, Mizumaki K, Masuyama Y, and Takase S: The Journal of Japanese Foundry Engineering Society, Vol. 32, No. 8, p. 580 (hereinafter referred to as the reference).

The C content in the base steel sheet of the obtained grain-oriented electrical steel sheets was 0.0050 % or less, and the Si, Mn, Sb, and Co amounts were all the same as those in the steel slab.

Next, a three-phase, three-leg model transformer was fabricated from obtained samples, simulating a transformer having external dimensions of 500 mm square and sheet widths of 100 mm for each leg and yoke. Iron loss WT_{17/50} (transformer iron loss when magnetized up to 1.7 T at 50 Hz) of this model transformer was then measured. For each sample, the number of sheets stacked in the model transformer was 50, and the sheets were stacked in an alternating two-sheet arrangement.

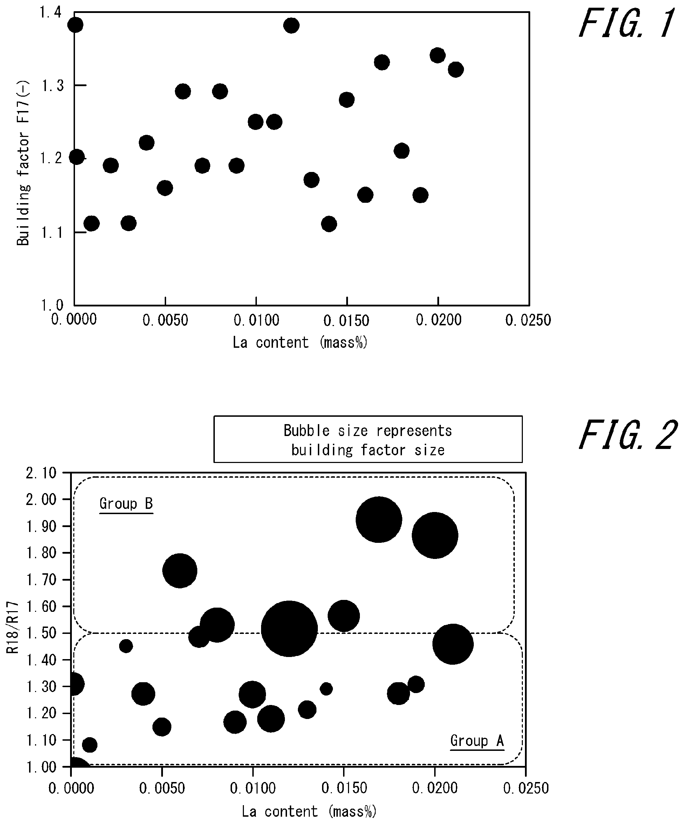

From the measurement results thus obtained, a building factor F17 of the model transformer was calculated as the value obtained by dividing the iron loss WT_{17/50} of the model transformer by the iron loss W_{17/50} of the sample (WT_{17/50}/W_{17/50}, no unit). The relationship between F17 and the La content (unit: mass%) in the base steel sheet was investigated and the results are illustrated in FIG. 1.

The results indicate no clear correlation between the building factor F17 and the La content. However, it can be read from FIG. 1 that the building factor F17 is divided into good values of 1.25 or less and high values of 1.30 or more.

Therefore, whether this difference in the building factor F17 could be explained based on a relationship between the iron loss and the hysteresis loss of the samples was investigated. As a result, when the ratio Wh₁₇/W_{17/50} of hysteresis loss Wh₁₇ to iron loss W_{17/50} when magnetized to 1.7 T is defined as R17 (no unit), and the ratio Wh₁₈/W_{18/50} of hysteresis loss Wh₁₈ to iron loss W_{18/50} when magnetized to 1.8 T is defined as R18 (no unit), it was found that when R17 and R18 were divided into Group A where R18/R17 ≤ 1.50 and otherwise Group B, a general trend can be seen in the building factor F17.

FIG. 2 illustrates the results of arranging the data in FIG. 1 in terms of R18/R17. In FIG. 2, each circle represents the building factor F17, and the larger the diameter of the circle (bubble), the larger the building factor. From the results illustrated in FIG. 2, it was found that there is a relationship of R18/R17 ≤ 1.50, that is, belonging to Group A, and when the La content in the base steel sheet is in a range of 0.0001 % to 0.0200 %, a good building factor of 1.25 or less is exhibited.

In FIG. 2, whether each bubble belongs to Group A or Group B can be determined by the region in which the circle center of each bubble exists.

### <Experiment 2>

Steel slabs were produced by continuous casting, containing, in mass%, La: 0.0010 %, C: 0.037 %, Si: 3.0 %, Mn: 0.18 %, Al: 0.009 %, N: 0.0036 %, Se: 0.007 %, Sn: 0.062 %, and Co: 0.0080 %, with the balance being Fe and inevitable impurity. Each steel slab was subjected to slab heating by soaking at 1300 °C for 30 min, and then hot rolled to a hot-rolled sheet having a thickness of 2.2 mm. The hot-rolled sheet was then subjected to hot-rolled sheet annealing at 1100 °C for 30 s in N₂ atmosphere. The annealed hot-rolled sheet was then cold rolled to a cold-rolled sheet having a thickness of 0.23 mm. This cold-rolled sheet was subjected to decarburization annealing at 840 °C for 120 s in a 40 % H₂, 60 % N₂ wet atmosphere with a dew point of 40 °C. Further, an annealing separator prepared by mixing various amounts of TiO₂ in a range of 0 parts by mass to 15 parts by mass relative to MgO was applied to the surface of the obtained decarburized annealed sheet, and purification annealing was carried out by holding at 1220 °C for 5 h to form a forsterite film. At this time, the heating rate to 1220 °C was 15 °C/h. Further, during the heating process, N₂ atmosphere was used from room temperature to 700 °C, an atmosphere in which the mixing ratio of N₂ and H₂ was varied was used from above 700 °C to 1100 °C, and H₂ atmosphere was used from above 1100 °C to 1200 °C. In this way, by changing the mixture ratio of H₂ and N₂ in the atmosphere during the heating process, the Ti content in the grain-oriented electrical steel sheet as a whole, obtained later, and in particular the Ti content in the steel sheet with the base film, was controlled. Further, H₂ atmosphere was used during the hold time, and Ar atmosphere was used during cooling.

A coating liquid was then applied to the resulting steel sheet to form an insulating coating on the base film.

The grain-oriented electrical steel sheets thus obtained, in which the forsterite film and the insulating coating were formed in this order on the surface of the base steel sheet, were used as samples. Then, for these samples, iron losses W_{17/50} and W_{18/50} (iron losses when magnetized to 1.7 T and 1.8 T, respectively, at 50 Hz) and the hysteresis losses Wh₁₇ and Wh₁₈ (hysteresis losses when magnetized to 1.7 T and 1.8 T, respectively) were measured using the method described in JIS C2550-1.

The Ti content of the grain-oriented electrical steel sheets having the base film that is mainly forsterite and the insulating coating were measured by the method specified in JIS G1223.

Further, in order to measure the La content in the base steel sheet, a portion of the obtained samples were immersed in a 10 % hydrochloric acid aqueous solution at 80 °C for 180 s to remove the forsterite film and the insulating coating, and the La content was measured in accordance with the method described in the above-mentioned reference. As a result, the La content was 0.0010 %, which was equivalent to the content of the steel slabs.

The C content in the base steel sheets of the obtained grain-oriented electrical steel sheets was 0.0050 % or less, and the Si, Mn, Sn, and Co amounts were all the same as those in the steel slabs.

From the obtained magnetic properties, as in Experiment 1, the ratio R17 of the hysteresis loss Wh₁₇ to the iron loss W_{17/50} when magnetized to 1.7 T and the ratio R18 of the hysteresis loss Wh₁₈ to the iron loss W_{18/50} when magnetized to 1.8 T were divided into Group A, where the ratio R18/R17 ≤ 1.50, and otherwise Group B.

As in Experiment 1, a three-phase three-leg model transformer was fabricated having external dimensions of 500 mm square and sheet widths of 100 mm for each leg and yoke. The iron loss WT_{17/50} value measured for this model transformer was used to calculate the building factor F17 (no unit).

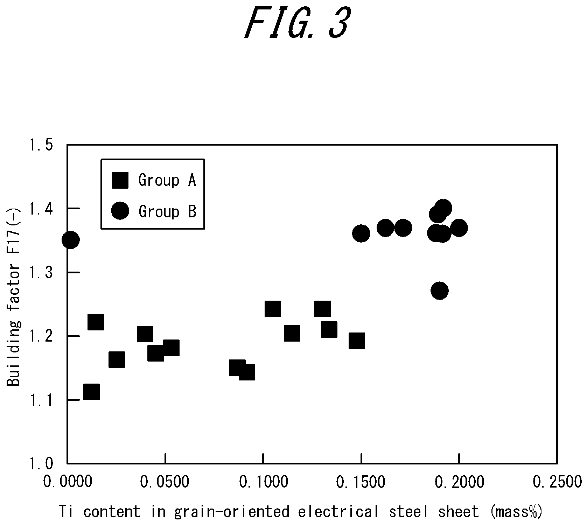

The relationship between the Ti content (unit: mass%) in the grain-oriented electrical steel sheet with the base film and the insulating coating still present and the building factor F17 was analyzed for samples belonging to Group A and Group B, and the results are illustrated in FIG. 3. In FIG. 3, Group A is indicated by black squares, and Group B is indicated by black circles. From the results illustrated in FIG. 3, it was found that when the Ti content of the grain-oriented electrical steel sheet with the base film and the insulating coating is 0.0050 % or more and 0.1500 % or less, the steel sheet belongs to Group A, and has a low and favorable building factor.

As described above, the mechanism by which the building factor of a model transformer is improved by controlling the La content in the base steel sheet and the Ti content in a grain-oriented electrical steel sheet in which a base film that is mainly forsterite and an insulating coating are formed in that order on the surface of the base steel sheet is not clear. However, the inventors considered the following.

A transformer is manufactured by shearing grain-oriented electrical steel sheets and assembling the sheared steel sheets. When strain occurs during this shearing, it becomes a problem that iron loss increases, but it is thought that adding a defined amount of La to the base steel sheet has the effect of decreasing this strain. La forms carbides and nitrides in the steel sheet, thereby relieving stress concentration. This reduces the shear strain that the steel sheets undergo when manufacturing a transformer, which may prevent an increase in iron loss and allow the building factor to remain low.

Here, La carbides and nitrides can also act as inhibitors, and therefore excessive addition of La has a negative effect on secondary recrystallization behavior. Taking this into consideration, the amount of La added to the base steel sheet is 0.0001 % or more and 0.0200 % or less.

However, through Experiments 1 and 2, there were two cases where the building factor was not good, even when La was added.

The first was when the ratio R17 of the hysteresis loss Wh₁₇ to the iron loss W_{17/50} when magnetized to 1.7 T and the ratio R18 of the hysteresis loss Wh₁₈ to the iron loss W_{18/50} when magnetized to 1.8 T do not satisfy the relationship R18/R17 ≤ 1.50. Hysteresis loss has a high correlation with magnetic flux density B₈ at a magnetic field strength of 800 A/m, and it is thought that there will be no large fluctuations in hysteresis loss when the magnetic flux density is the same B₈. Therefore, when R18/R17 exceeds 1.50, it is considered that the eddy current loss is large. In a transformer, even when magnetized with a sinusoidal waveform, a high-harmonic component is superimposed and the waveform is distorted, which may increase eddy current loss, which is highly frequency-dependent. Thus, it is thought that as the eddy current loss ratio increases, the building factor increases.

The second was when the Ti content of the steel sheet with the base film and the insulating coating (grain-oriented electrical steel sheet) was less than 0.0050 % or exceeds 0.1500 %. It is thought that the presence of a certain amount of Ti in the forsterite film improves the coating properties. For example, when the film tension of the base film is increased due to the presence of Ti, the magnetic domains in the base steel sheet become finer, which may result in a decrease in eddy current loss in a transformer that uses grain-oriented electrical steel sheets. In such a case, the eddy current loss ratio is lowered, contrary to the case of high R18/R17 described above, and therefore the building factor may be decreased. However, when the Ti content is too high, a large amount of substances having compositions different from forsterite, such as Ti nitrides and/or Ti oxides, are formed, which is thought to decrease the film tension of the forsterite base film. As a result, the building factor is thought to increase.

The present disclosure is based on the above discoveries. Primary features of the present disclosure are as follows.
[1] A grain-oriented electrical steel sheet comprising: a base steel sheet having a chemical composition in mass%, containing (consisting of) C: 0.0050 % or less, Si: 1.5 % to 8.0 %, Mn: 0.02 % to 1.00 %, and La: 0.0001 % to 0.0200 %, with the balance being Fe and inevitable impurity; and a base film mainly composed of forsterite and an insulating coating in this order on the surface of the base steel sheet, wherein
   Ti content in the grain-oriented electrical steel sheet is 0.0050 mass% to 0.1500 mass%, and
   the following expression (1) is satisfied, where R17 is a ratio Wh₁₇/W_{17/50} of hysteresis loss Wh₁₇ to iron loss W_{17/50} when magnetized to 1.7 T and R18 is a ratio Wh₁₈/W_{18/50} of hysteresis loss Wh₁₈ to iron loss W_{18/50} when magnetized to 1.8 T, $R 18 / R 17 \leq 1.50$
[2] The grain-oriented electrical steel sheet according to [1], wherein Ti content of the base steel sheet is 0.0030 mass% or less.
[3] The grain-oriented electrical steel sheet according to [1] or [2], wherein the base steel sheet further contains Ga: 0.0001 mass% to 0.0050 mass%.
[4] The grain-oriented electrical steel sheet according to any one of [1] to [3], wherein the base steel sheet further contains one or more selected from the group consisting of Sn: 0.500 mass% or less, Cr: 0.500 mass% or less, Cu: 0.50 mass% or less, Ni: 0.50 mass% or less, Bi: 0.500 mass% or less, P: 0.500 mass% or less, Sb: 0.500 mass% or less, Mo: 0.500 mass% or less, B: 25.0 mass ppm or less, Nb: 0.020 mass% or less, V: 0.020 mass% or less, As: 0.0200 mass% or less, Zn: 0.020 mass% or less, Pb: 0.0100 mass% or less, W: 0.0500 mass% or less, Co: 0.050 mass% or less, and Ge: 0.0050 mass% or less.

### (Advantageous Effect)

According to the present disclosure, by controlling the La content in the base steel sheet and the Ti content in the grain-oriented electrical steel sheet including the base film and the insulating coating in that order on the surface of the base steel sheet within defined ranges, and satisfying a defined loss relationship, it is possible to provide the grain-oriented electrical steel sheet that can decrease the building factor.

### BRIEF DESCRIPTION OF THE DRAWINGS

In the accompanying drawings:
FIG. 1 is a graph illustrating a relationship between La content in base steel sheets and building factor;
FIG. 2 is a graph illustrating influence of the La content in the base steel sheets and R18/R17 values on the building factor; and
FIG. 3 is a graph illustrating a relationship between Ti content in grain-oriented electrical steel sheets and the building factor.

### DETAILED DESCRIPTION

### (Grain-oriented electrical steel sheet)

The grain-oriented electrical steel sheet of the present disclosure includes a base steel sheet containing defined amounts of defined elements including La, a base film that is mainly forsterite and formed on one or both surfaces of the base steel sheet, and an insulating coating formed on the base film. Further, the grain-oriented electrical steel sheet of the present disclosure contains a defined amount of Ti as a whole. Further, the grain-oriented electrical steel sheet of the present disclosure satisfies a defined expression (1) regarding loss. The grain-oriented electrical steel sheet of the present disclosure has these characteristics, and when used as an iron core material for a transformer, can exhibit a good building factor.

The grain-oriented electrical steel sheet of the present disclosure can be obtained, for example, according to the production method described below.

### [Chemical composition of base steel sheet]

Reasons for limitations on the primary features of the present disclosure are explained below. First, the amount of each element in the chemical composition of the base steel sheet is described. Hereinafter, "%" and "ppm" designations for chemical composition refer to "mass%" and "mass ppm", respectively, unless otherwise noted.

### C: 0.0050 % or less

When C exceeds 0.0050 %, iron loss increases due to magnetic aging, and therefore C content is limited to 0.0050 % or less. The C content is preferably 0.0030 % or less. On the other hand, when the C content is less than 0.0010 %, the magnetic flux density may decrease. Therefore, a preferred lower limit of the C content is 0.0010 %.

### Si: 1.5 % to 8.0 %

Si is an element necessary to increase the specific resistance of steel and decrease iron loss, but less than 1.5 % is ineffective. When Si content exceeds 8.0 %, steel workability is decreased, making rolling difficult. The Si content is therefore limited to 1.5 % to 8.0 %. The Si content is preferably 1.50 % or more. The Si content is more preferably 2.50 % or more. The Si content is preferably 8.00 % or less. The Si content is more preferably 4.50 % or less. The range of the Si content is preferably 2.50 % to 4.50 %.

### Mn: 0.02 % to 1.00 %

Mn is an element necessary to obtain good hot workability, but Mn content less than 0.02 % is ineffective. On the other hand, when the Mn content exceeds 1.00 %, the magnetic flux density of the grain-oriented electrical steel sheet as a product sheet decreases. The Mn content is therefore from 0.02 % to 1.00 %. The Mn content is preferably 0.04 % or more. The Mn content is preferably 0.20 % or less. The range of the Mn content is preferably 0.04 % to 0.20 %.

### La: 0.0001 % to 0.0200 %

For the reasons mentioned above, it is essential that La content be in the range from 0.0001 % to 0.0200 %. The La content is preferably 0.0005 % or more. The La content is preferably 0.0150 % or less. The La content is more preferably 0.0100 % or less. The range of the La content is preferably 0.0001 % to 0.0150 %. The range of the La content is more preferably 0.0005 % to 0.0100 %.

The La content of 0.0001 % or more exceeds the content of inevitable impurity that may be mixed into a normal base steel sheet.

The chemical composition of the base steel sheet of the grain-oriented electrical steel sheet of the present disclosure contains at least the above-mentioned basic components, with the balance being Fe and inevitable impurity. In addition to the above basic components, the base steel sheet may contain the following optional elements as required.

Ga can be suitably added to the base steel sheet for the purpose of further improving the magnetic properties.

### Ga: 0.0001 % to 0.0050 %

Ga is an element that contributes to decreasing the building factor. Here, the mechanism by which Ga in the base steel sheet improves the building factor of the model transformer is not clear, but the inventors considered that it is due to the influence of Ga precipitates remaining in the grain-oriented electrical steel sheet as a product. The yoke and legs of the transformer have a certain width, and therefore the magnetic path differs in distance between the inside and the outside, like a track in athletics. Therefore, during excitation, the magnetic flux tends to be biased toward the inner side where the magnetic path is short. Even when the entire steel sheet is magnetized to 1.7 T, the magnetic flux density on the inner side of the steel sheet exceeds that. Therefore, it may be that the more favorable the high magnetic field properties, the better the transformer properties such as the building factor.

Further, Ga functions as an inhibitor to suppress normal grain growth of grains that are misoriented from the Goss orientation during secondary recrystallization. However, Ga is not completely removed during purification and remains finely dispersed in the steel. It is presumed that this fine residual Ga acts as the starting point for rotating magnetic flux without impairing iron loss, thereby improving the building factor.

The Ga content is preferably 0.0001 % or more. The Ga content is more preferably 0.0005 % or more. The Ga content is even more preferably 0.0010 % or more. The Ga content is preferably 0.0050 % or less. The Ga content is more preferably 0.0040 % or less. The Ga content is even more preferably 0.0030 % or less. The range of the Ga content is preferably 0.0005 % to 0.0040 %. The range of the Ga content is even more preferably 0.0010 % to 0.0030 %.

Similarly, in order to further improve the magnetic properties, one or a combination of two or more of Sn: 0.500 % or less, Cr: 0.500 % or less, Cu: 0.50 % or less, Ni: 0.50 % or less, Bi: 0.500 % or less, P: 0.500 % or less, Sb: 0.500 % or less, Mo: 0.500 % or less, B: 25.0 ppm or less, Nb: 0.020 % or less, V: 0.020 % or less, As: 0.0200 % or less, Zn: 0.020 % or less, Pb: 0.0100 % or less, W: 0.0500 % or less, Co: 0.050 % or less, and Ge: 0.0050 % or less can be added to the base steel sheet.

That is, each of the above optional elements may be added to the base steel sheet in a range up to the upper limit described above to further improve magnetic properties. When the amount of each optional element added exceeds the above upper limit, the development of secondary recrystallized grains may be suppressed and magnetic properties may deteriorate.

Although there is no particular need to limit a lower limit of each selectively-added element, each element is preferably in the following range.

Sn: 0.005 % or more, Cr: 0.005 % or more, Cu: 0.01 % or more, Ni: 0.01 % or more, Bi: 0.005 % or more, P: 0.005 % or more, Sb: 0.005 % or more, Mo: 0.005 % or more, B: 0.1 ppm or more, Nb: 0.001 % or more, V: 0.001 % or more, As: 0.0010 % or more, Zn: 0.001 % or more, Pb: 0.0001 % or more, W: 0.0010 % or more, Co: 0.002 % or more, and Ge: 0.0001 % or more.

### Ti: 0.0030 % or less

Ti content in the base steel sheet is preferably 0.0030 % or less. The Ti content is more preferably 0.0015 % or less, and may be 0 % (none contained). This is because when the Ti content in the base steel sheet exceeds 0.0030 %, Ti precipitates are likely to form in the steel, which may greatly degrade the iron loss.

The above-mentioned chemical composition is the chemical composition of the base steel sheet on which neither the forsterite base film nor the insulating coating is formed on the surface. When checking the chemical composition from the grain-oriented electrical steel sheet in which the forsterite film and the insulating coating are formed on the surface of the base steel sheet, for example, as indicated in Experiment 1, the forsterite film and the insulating coating may be removed from the grain-oriented electrical steel sheet, and then the content of each element may be confirmed.

### [Chemical composition of grain-oriented electrical steel sheet and base film]

According to the present disclosure, Ti content in the grain-oriented electrical steel sheet including the base film mainly composed of forsterite and the insulating coating is limited to 0.0050 % to 0.1500 %. The Ti content in the grain-oriented electrical steel sheet is preferably 0.0060 % or more. The Ti content is preferably 0.0150 % or less. The range of the Ti content in the grain-oriented electrical steel sheet is preferably 0.0060 % to 0.0150 %. This is because, as mentioned above, it is considered that the presence of a certain amount of Ti in a forsterite film can improve the coating properties and decrease eddy current loss, but when the content is less than 0.0050 %, this effect is poor.

The Ti content in the grain-oriented electrical steel sheet is the ratio (mass%) of the total amount of Ti present in the base steel sheet, base film, and insulating coating to the total mass (solid content equivalent) of the base steel sheet, base film, and insulating coating. Normally, this is the ratio (mass%) of the total amount of Ti present in the base steel sheet and the base film to the total mass (solid content equivalent) mentioned above. The Ti content in the grain-oriented electrical steel sheet can be measured in accordance with JIS G1223, regardless of whether the base film and the insulating coating are formed on only one side or both sides of the base steel sheet.

In view of the above, the Ti content in the forsterite film is preferably 0.0020 % or more. The Ti content is more preferably 0.0050 % or more. The Ti content is even more preferably 0.0060 % or more. Further, the Ti content in the forsterite film is preferably 0.0150 % or less. The Ti content is more preferably 0.0120 % or less.

Here, when limiting the Ti content in the steel sheet including the base film and the insulating coating (the grain-oriented electrical steel sheet) to 0.0050 % to 0.1500 %, as described above, the Ti content in the base steel sheet is preferably 0.0030 % or less.

### [Magnetic properties of grain-oriented electrical steel sheet]

Further, according to the present disclosure, as described above, parameters calculated from the hysteresis loss and the iron loss of the grain-oriented electrical steel sheet as the product steel sheet need to satisfy defined ranges. That is, the ratio R17 (=Wh₁₇/W_{17/50}) of the hysteresis loss Wh₁₇ to the iron loss W_{17/50} when magnetized to 1.7 T and the ratio R18 (=Wh₁₈/W_{18/50}) of the hysteresis loss Wh₁₈ to the iron loss W_{18/50} when magnetized to 1.8 T need to satisfy the relationship R18/R17 ≤ 1.50 indicated in expression (1). When the grain-oriented electrical steel sheet does not satisfy the above expression (1), a low building factor cannot be exhibited.

These values can be measured by the method described in JIS C2550-1. In order to match the hysteresis loss with the iron loss at 50 Hz, the hysteresis loss can be calculated by multiplying the energy loss of the iron core in one cycle of the hysteresis loop by 50, which is the excitation frequency.

The value of R18/R17 can be controlled, for example, by changing the conditions of each production process to change the magnetic flux density B₈, but is not limited to this example.

### [Method of producing grain-oriented electrical steel sheet]

The following describes an example of a method of production that can obtain the grain-oriented electrical steel sheet of the present disclosure. The method of production may use a typical method for producing an electrical steel sheet. For example, a slab may be produced from molten steel adjusted to the above-mentioned defined chemical composition by normal ingot casting or continuous casting. Further, a thin slab or thinner cast steel having a thickness of 100 mm or less may be prepared by direct casting from such molten steel. The molten steel may be produced by a blast furnace process or an electric furnace steelmaking process. The above-mentioned optional components that are preferably added to steel are difficult to add during intermediate processes, and are therefore preferably added to the molten steel.

The slab can be heated and hot rolled by normal methods. Alternatively, the slab may be hot rolled immediately after casting without heating. When heating, a chemical composition containing a small amount of inhibitor components does not require high-temperature heating for dissolving the inhibitor, and therefore a low temperature of 1300 °C or lower is effective for cost-reduction purposes. The heating temperature of the slab is preferably 1250 °C or lower. The hot rolling conditions may be in accordance with conventional methods. In this way, a hot-rolled sheet is obtainable.

Next, the obtained hot-rolled sheet can be subjected to hot-rolled sheet annealing as required. The hot-rolled sheet annealing temperature is preferably around 950 °C to 1150 °C. When the hot-rolled sheet annealing temperature is lower than 950 °C, unrecrystallized portions tend to remain in the steel. On the other hand, when the hot-rolled sheet annealing temperature exceeds 1150 °C, grain size in the steel after annealing may become too coarse, which may result in an inappropriate primary recrystallized texture. The hot-rolled sheet annealing temperature is preferably 950 °C or higher. The hot-rolled sheet annealing temperature is more preferably 1000 °C or higher. The hot-rolled sheet annealing temperature is preferably 1150 °C or lower. The hot-rolled sheet annealing temperature is more preferably 1100 °C or lower. The hot-rolled sheet annealing temperature is preferably in a range from 1000 °C to 1100 °C. In this way, a hot-rolled and annealed sheet is obtainable.

The hot-rolled sheet after hot rolling or the hot-rolled and annealed sheet after hot-rolled sheet annealing can be made into a cold-rolled sheet having a final sheet thickness by one cold rolling once or twice or more with intermediate annealing in between. The annealing temperature of the intermediate annealing is preferably 900 °C or higher. The intermediate annealing temperature is preferably 1200 °C or lower. The intermediate annealing temperature is more preferably in the range from 900 °C to 1200 °C. When the intermediate annealing temperature is lower than 900 °C, recrystallized grains after the intermediate annealing tend to become fine. Further, the number of Goss nuclei in the primary recrystallized texture may decrease, which may result in a degradation in the magnetic properties of the grain-oriented electrical steel sheet as a product sheet. On the other hand, when the intermediate annealing temperature exceeds 1200 °C, the crystal grains may become too coarse, as in the case of hot-rolled sheet annealing, making it difficult to obtain a uniformly-sized grain primary recrystallized texture. In this way, a cold-rolled sheet is obtainable.

The cold-rolled sheet having a final sheet thickness can then be subjected to primary recrystallization annealing that also serves as decarburization annealing. The annealing temperature for this primary recrystallization annealing is, when accompanied by decarburization annealing and from the viewpoint of allowing the decarburization reaction to proceed rapidly, preferably 800 °C or higher. The annealing temperature is preferably 900 °C or lower. The annealing temperature is more preferably in a range from 800 °C to 900 °C. Further, the atmosphere during the primary recrystallization annealing, which also serves as decarburization annealing, is preferably a wet atmosphere. In this way, a primary recrystallized sheet (decarburized annealed sheet) is obtainable.

Thereafter, an annealing separator mainly composed of MgO can be applied to one or both surfaces of the primary recrystallized sheet, followed by secondary recrystallization annealing. The secondary recrystallization annealing may also serve as purification annealing for purifying components. This allows the secondary recrystallized texture to develop and also allows a forsterite film to be formed on the surface of the steel sheet. In this way, a base film-coated steel sheet can be obtained in which the base film is formed on the surface of the base steel sheet.

Here, "mainly composed of MgO" means that the annealing separator contains 75 mass% or more of MgO in solid content equivalent.

Here, by adding a Ti compound to the annealing separator and introducing N₂ atmosphere during purification annealing (heating and holding), Ti can be effectively made present in the forsterite film. From the viewpoint of incorporating Ti into the base film and effectively controlling the Ti content in the grain-oriented electrical steel sheet to 0.0050 % to 0.1500 %, TiO₂ and TiN are preferred as Ti compounds, with TiO₂ being more preferred. Further, the content of the compound in the annealing separator, relative to MgO, is preferably 2 parts by mass or more. The content is preferably 15 parts by mass or less.

However, the above requirements for Ti may be met by other methods. Other methods include, for example, adding Ti as a material component and changing the purification annealing conditions.

Next, the secondary recrystallization annealing is preferably carried out at 800 °C or higher in order to induce secondary recrystallization in the Goss orientation. Further, from the viewpoint of purification, it is desirable to heat to 1100 °C or higher. The longer the holding time, the more purification proceeds, but high-temperature creep may cause shape degradation. The holding time for purification annealing is therefore preferably 3 h or longer. The holding time is preferably 15 h or shorter. After the secondary recrystallization annealing, water washing, brushing, or pickling is preferably carried out to remove adhered annealing separator.

Subsequently, flattening annealing is carried out for shape adjustment, which is effective for iron loss reduction.

Further, when grain-oriented electrical steel sheets are used in a stacked configuration, it is effective to apply an insulating coating to the steel sheet surface (more specifically, the base film surface) before or after flattening annealing in order to improve iron loss. As the insulating coating, a film that can impart tension to the grain-oriented electrical steel sheet to decrease iron loss is preferable. The material property of the insulating coating is not particularly limited, and the coating can be made of any insulating material. Typically, an inorganic coating is used as the insulating coating. The method of forming the insulating coating is not particularly limited, and examples include a method of applying a coating treatment liquid, a tension coating method using a binder, a physical vapor deposition method, and a chemical vapor deposition method. The method of forming a coating by vapor deposition of an inorganic substance onto the steel sheet surface layer is thus preferred because it provides excellent coating adhesion and tends to enhance the iron loss reduction effect. When the method of applying a coating treatment liquid is used, the coating treatment liquid can be applied before flattening annealing, and then baked by carrying out flattening annealing. The composition of the coating treatment liquid is not particularly limited. For example, a treatment liquid containing phosphate and silica can be used.

### [Example 1]

Steel slab A containing C: 0.070 %, Si: 3.5 %, Mn: 0.07 %, Al: 0.0085 %, N: 0.0050 %, La: 0.0080 %, Mo: 0.026 %, Ti: 0.0022 %, with the balance being Fe and inevitable impurity; steel slab B containing C: 0.072 %, Si: 3.51 %, Mn: 0.07 %, Al: 0.0080 %, N: 0.0047 %, La: 0.0100 %, Mo: 0.025 %, Ti: 0.0020 %, with the balance being Fe and inevitable impurity; steel slab C containing C: 0.072 %, Si: 3.49 %, Mn: 0.07 %, Al: 0.0090 %, N: 0.0051 %, La: 0.0250 %, Mo: 0.025 %, Ti: 0.0017 %, with the balance being Fe and inevitable impurity; and steel slab D containing C: 0.070 %, Si: 3.48 %, Mn: 0.07 %, Al: 0.0087 %, N: 0.0049 %, La: 0.0170 %, Mo: 0.025 %, Ti: 0.0020 %, with the balance being Fe and inevitable impurity, were each produced by continuous casting. Steel slabs A, B, C, and D were subjected to slab heating by soaking at 1200 °C for 40 min. Thereafter, hot rolling was applied to obtain a hot-rolled sheet having a thickness of 2.2 mm. Hot-rolled sheet annealing was then carried out on the hot-rolled sheet at 1000 °C for 60 s in N₂ atmosphere. The resulting hot-rolled and annealed sheet was then cold rolled to a cold-rolled sheet having a thickness of 0.23 mm. Further, the cold-rolled sheet was subjected to primary recrystallization annealing, which also served as decarburization annealing, in a wet atmosphere of 60 % H₂, 40 % N₂ with a dew point of 60 °C at 850 °C for 90 s.

Next, an annealing separator mainly composed of MgO (MgO: 97 %) was applied to both surfaces of the base steel sheet (primary recrystallized sheet) after decarburization annealing. For the annealing separator, TiO₂ powder was put into warm water at 50 °C and stirred for 24 h, and 5 parts by mass of the resulting superhydrated TiO₂ was added to the MgO powder.

Purification annealing was then carried out by holding at 1100 °C for 25 h and then at 1200 °C for 10 h. During the heating process, N₂ atmosphere was used from room temperature to 700 °C, an atmosphere in which the mixing ratio of N₂ and H₂ was varied was used from above 700 °C to 1100 °C, and

H₂ atmosphere was used from the start of holding above 1100 °C to the end of holding at 1200 °C. Further, Ar atmosphere was used during cooling.

The Ti content of the obtained samples, that is, the base steel sheets with the base film mainly composed of forsterite formed thereon, was measured according to the method specified in JIS G1223. The results are listed in Table 1. In this example, the Ti content does not change due to the formation of an insulating coating in a later process. Therefore, the table lists the measurement results as the Ti content in the grain-oriented electrical steel sheets.

On the base film of each of the steel sheets, an insulating coating consisting mainly of magnesium phosphate and silica was applied. For the samples obtained, that is, the grain-oriented electrical steel sheets each having the base film and the insulating coating formed in that order on the surface of the base steel sheet, the iron losses W_{17/50} and W_{18/50} (iron losses when magnetized to 1.7 T and 1.8 T, respectively, at 50 Hz) and hysteresis losses Wh₁₇ and Wh₁₈ (hysteresis losses when magnetized to 1.7 T and 1.8 T, respectively) were measured according to the method specified in JIS C2550-1. Then, R17, which is the ratio of the hysteresis loss Wh₁₇ to the iron loss W_{17/50}, and R18, which is the ratio of the hysteresis loss Wh₁₈ to the iron loss W_{18/50}, were calculated. The results are listed in Table 1.

Further, to measure the Ti content in each base steel sheet, a portion of the obtained samples were immersed in a 10 % hydrochloric acid aqueous solution at 80 °C for 180 s to remove the forsterite film and the insulating coating, and then measurement was carried out by the method specified in JIS G1223. The measurement results are listed in Table 1. The C content of the base steel sheets was measured according to the method specified in JIS G1211-3:2018 and is also listed in Table 1. The Si content, Mn content, and La content of the base steel sheets were also measured by the methods specified in JIS G1212:1997, JIS G1213:2001, and the above-mentioned reference, respectively, and were confirmed to be the same as the content in the steel slab.

Next, a three-phase, three-leg model transformer was fabricated from each sample with the insulating coating, simulating a transformer having external dimensions of 500 mm square and sheet widths of 100 mm for each leg and yoke. Iron loss WT_{17/50} (transformer iron loss when magnetized up to 1.7 T at 50 Hz) of this model transformer was then measured. For each sample, the number of sheets stacked in the model transformer was 50, and the sheets were stacked in an alternating two-sheet arrangement.

From obtained results, the building factor F17 of the model transformer was then calculated as the model transformer iron loss WT_{17/50} divided by the sample iron loss W_{17/50} (WT_{17/50}/W_{17/50}). The results are listed in Table 1.

As is clear from the table, a good iron loss property (building factor) was obtained under conditions within the ranges of the present disclosure.

### [Table 1]

**Table 1**

| No. | Steel slab | Ti content in grain-oriented electrical steel sheet (mass%) | Ti content in base steel sheet (mass%) | La content in base steel sheet (mass%) | C content in base steel sheet (mass%) | R17 (-) | R18 (-) | R18/R17 (-) | Building factor F17 (-) | Remarks |
|---|---|---|---|---|---|---|---|---|---|---|
| 1 | A | 0.0150 | 0.0022 | 0.0080 | 0.0025 | 0.38 | 0.40 | 1.05 | 1.19 | Example |
| 2 | B | 0.0041 | 0.0020 | 0.0100 | 0.0022 | 0.43 | 0.48 | 1.13 | 1.29 | Comparative Example |
| 3 | C | 0.0176 | 0.0017 | 0.0250 | 0.0023 | 0.42 | 0.49 | 1.19 | 1.35 | Comparative Example |
| 4 | D | 0.0120 | 0.0020 | 0.0170 | 0.0019 | 0.45 | 0.77 | 1.71 | 1.33 | Comparative Example |

| | | | | | | | | | | |
|---|---|---|---|---|---|---|---|---|---|---|
| Underlining indicates value outside scope of present disclosure. | | | | | | | | | | |

### [Example 2]

Steel slabs containing the elements listed in Table 2, with the balance being Fe and inevitable impurity, were produced by continuous casting. Each steel slab was subjected to slab heating by soaking at 1410 °C for 20 min, and then hot rolled to a hot-rolled sheet having a thickness of 2.4 mm. The hot-rolled sheet was then subjected to hot-rolled sheet annealing at 1100 °C for 20 s in N₂ atmosphere. The annealed hot-rolled sheet was then cold rolled to an intermediate cold-rolled sheet thickness of 1.5 mm, and further subjected to intermediate annealing at 900 °C for 100 s in a 25 % H₂, 75 % N₂ atmosphere. The annealed intermediate cold-rolled sheet was then cold rolled to a cold-rolled sheet having a thickness of 0.23 mm. This cold-rolled sheet was subjected to decarburization annealing at 825 °C for 150 s in a 40 % H₂, 60 % N₂ wet atmosphere with a dew point of 45 °C.

To each obtained decarburized annealed sheet, an annealing separator mainly composed of MgO (MgO: 88 %) was then applied to the surfaces (both sides). For the annealing separator, TiO₂ powder was put into warm water at 50 °C and stirred for 24 h, and 5 parts by mass of the resulting superhydrated TiO₂ was added to the MgO powder.

Further, purification annealing was carried out by holding at 1200 °C for 10 h to form a base film that was mainly forsterite. At this time, the heating rate was 15 °C/h to 1200 °C. Further, during the heating process, N₂ atmosphere was used from room temperature to 700 °C, atmospheres with various N₂ and H₂ mixture ratios were used from above 700 °C to 1100 °C, and H₂ atmosphere was used from above 1100 °C to 1200 °C. Further, H₂ atmosphere was used during the hold time, and Ar atmosphere was used during cooling.

**[Table 2]**

| Table 2 | | | | | | | (mass%) |
|---|---|---|---|---|---|---|---|
| No. | C | Si | Mn | La | Ti | Ga | Other |
| 5 | 0.0010 | 3.0 | 0.15 | 0.0040 | 0.0019 | - | - |
| 6 | 0.1113 | 3.1 | 0.70 | 0.0160 | 0.0022 | - | - |
| 7 | 0.0412 | 1.0 | 1.00 | 0.0010 | 0.0003 | - | - |
| 8 | 0.0360 | 8.3 | 0.42 | 0.0040 | 0.0021 | - | - |
| 9 | 0.0422 | 4.9 | 0.01 | 0.0190 | 0.0009 | - | - |
| 10 | 0.0521 | 2.7 | 1.50 | 0.0160 | 0.0013 | - | - |
| 11 | 0.0445 | 2.8 | 0.25 | 0.0000 | 0.0011 | - | - |
| 12 | 0.0398 | 5.1 | 0.94 | 0.0220 | 0.0028 | - | - |
| 13 | 0.0499 | 4.9 | 0.15 | 0.0030 | 0.0011 | 0.00004 | - |
| 14 | 0.0360 | 1.9 | 0.80 | 0.0160 | 0.0018 | 0.0052 | - |
| 15 | 0.0453 | 3.6 | 0.24 | 0.0150 | 0.0018 | - | - |
| 16 | 0.0415 | 3.5 | 0.09 | 0.0190 | 0.0021 | - | - |
| 17 | 0.0371 | 6.4 | 0.51 | 0.0080 | 0.0035 | - | - |
| 18 | 0.0381 | 6.0 | 0.95 | 0.0150 | 0.0016 | - | - |
| 19 | 0.0509 | 7.9 | 0.38 | 0.0130 | 0.0017 | - | - |
| 20 | 0.0412 | 1.8 | 0.50 | 0.0030 | 0.0004 | - | - |
| 21 | 0.0369 | 7.5 | 0.78 | 0.0180 | 0.0026 | - | - |
| 22 | 0.0411 | 2.8 | 0.02 | 0.0060 | 0.0005 | - | - |
| 23 | 0.0399 | 2.9 | 0.08 | 0.0130 | 0.0020 | - | - |
| 24 | 0.0433 | 6.8 | 0.70 | 0.0011 | 0.0030 | - | - |
| 25 | 0.0355 | 2.2 | 0.91 | 0.0190 | 0.0006 | - | - |
| 26 | 0.0349 | 1.7 | 0.26 | 0.0040 | 0.0025 | - | - |
| 27 | 0.0453 | 8.0 | 0.61 | 0.0100 | 0.0013 | - | - |
| 28 | 0.0289 | 2.9 | 0.34 | 0.0120 | 0.0035 | - | - |
| 29 | 0.0466 | 5.8 | 0.39 | 0.0150 | 0.0009 | - | - |
| 30 | 0.0512 | 7.0 | 0.08 | 0.0100 | 0.0023 | - | - |

**Table 2 (cont'd)**

| | | | | | | | (mass%, but ppm indicates mass ppm) |
|---|---|---|---|---|---|---|---|
| No. | C | Si | Mn | La | Ti | Ga | Other |
| 31 | 0.0565 | 7.9 | 0.21 | 0.0100 | 0.0005 | - | Sn:0.46, Ni:0.02, Bi:0.006 |
| 32 | 0.0439 | 5.5 | 0.33 | 0.0070 | 0.0029 | - | Cr:0.010, P:0.012, Ni:0.45 |
| 33 | 0.0387 | 3.8 | 0.27 | 0.0170 | 0.0009 | - | P:0.22, Sb:0.006, Nb:0.004, Cr:0.35 |
| 34 | 0.0239 | 5.9 | 0.44 | 0.0060 | 0.0006 | - | Sn:0.006, B:0.5 ppm, Cu:0.35 |
| 35 | 0.0401 | 4.2 | 0.36 | 0.0120 | 0.0027 | - | Cr:0.40, Bi:0.18, Mo:0.36 |
| 36 | 0.0388 | 6.4 | 0.29 | 0.0190 | 0.0010 | - | Cu:0.02, Sb:0.35, B:10 ppm |
| 37 | 0.0511 | 6.3 | 0.44 | 0.0090 | 0.0004 | - | Mo:0.011, Nb:0.017, Bi:0.450 |
| 38 | 0.0329 | 4.1 | 0.91 | 0.0070 | 0.0024 | - | V:0.003, As:0.006, Ge:0.005 |
| 39 | 0.0439 | 7.4 | 0.74 | 0.0190 | 0.0014 | - | Co:0.003, Zn:0.006, Pb:0.009 |
| 40 | 0.0519 | 6.5 | 0.54 | 0.0040 | 0.0023 | 0.0004 | - |
| 41 | 0.0412 | 1.6 | 0.28 | 0.0030 | 0.0007 | 0.0048 | - |
| 42 | 0.0443 | 6.3 | 0.17 | 0.0120 | 0.0020 | 0.0007 | - |
| 43 | 0.0439 | 6.9 | 0.82 | 0.0200 | 0.0016 | 0.0012 | - |
| 44 | 0.0387 | 5.7 | 0.13 | 0.0040 | 0.0015 | 0.0009 | - |
| 45 | 0.0534 | 2.2 | 0.28 | 0.0020 | 0.0014 | 0.0017 | - |
| 46 | 0.0288 | 5.9 | 0.99 | 0.0080 | 0.0014 | 0.0037 | - |
| 47 | 0.0416 | 7.8 | 0.49 | 0.0180 | 0.0007 | 0.0030 | - |
| 48 | 0.0329 | 2.7 | 0.95 | 0.0190 | 0.0025 | 0.0027 | - |
| 49 | 0.0418 | 5.1 | 0.78 | 0.0080 | 0.0015 | 0.0034 | Sn:0.45, Ni:0.05, Bi:0.005 |
| 50 | 0.0380 | 7.4 | 0.83 | 0.0020 | 0.0020 | 0.0026 | Cr:0.011, P:0.006, Ni:0.34 |
| 51 | 0.0587 | 3.8 | 0.16 | 0.0160 | 0.0011 | 0.0038 | P:0.20, Sb:0.011, Nb:0.003, Cr:0.24 |
| 52 | 0.0409 | 3.4 | 0.93 | 0.0020 | 0.0020 | 0.0026 | Sn:0.007, B:0.5 ppm, Cu:0.31 |
| 53 | 0.0389 | 4.3 | 0.90 | 0.0130 | 0.0020 | 0.0007 | Cr:0.45, Bi:0.46, Mo:0.40 |
| 54 | 0.0511 | 7.0 | 0.75 | 0.0120 | 0.0026 | 0.0047 | Cu:0.02, Sb:0.35, B:15 ppm |
| 55 | 0.0612 | 3.0 | 0.85 | 0.0010 | 0.0017 | 0.0037 | Mo:0.006, Nb:0.018, Bi:0.43 |
| 56 | 0.0598 | 4.0 | 0.74 | 0.0130 | 0.0015 | 0.0002 | V:0.002, As:0.008, Ge:0.0035 |
| 57 | 0.0518 | 5.6 | 0.36 | 0.0080 | 0.0008 | 0.0028 | Co:0.005, Zn:0.003, Pb:0.0002 |
| 58 | 0.0408 | 2.0 | 0.79 | 0.0010 | 0.0028 | 0.0030 | Sn:0.006, Ni:0.44, Bi:0.006, V:0.024 |
| 59 | 0.0411 | 1.5 | 0.25 | 0.0050 | 0.0029 | 0.0027 | Cr:0.476, As:0.016, Ge:0.0001, P:0.038, Ni:0.02 |
| 60 | 0.0447 | 5.4 | 0.44 | 0.0190 | 0.0028 | 0.0004 | Co:0.047, Zn:0.017, Pb:0.008, Ti:0.024 |
| 61 | 0.0651 | 4.7 | 0.74 | 0.0160 | 0.0005 | 0.0004 | Sn:0.011, B:21.2 ppm, Cu:0.36 |
| 62 | 0.0512 | 2.7 | 0.14 | 0.0030 | 0.0010 | 0.0021 | Cr:0.41, Bi:0.17, Pb:0.0110, Mo:0.30 |
| 63 | 0.0439 | 4.5 | 0.82 | 0.0170 | 0.0023 | 0.0008 | Cu:0.02, As:0.0026, Zn:0.012, Co:0.049 |
| 64 | 0.0312 | 2.3 | 0.36 | 0.0110 | 0.0008 | 0.0042 | Sb:0.33, Ge:0.0003, B:0.8 ppm |
| 65 | 0.0401 | 1.6 | 0.74 | 0.0040 | 0.0026 | 0.0011 | Mo:0.009, Ti:0.0370, V:0.013, Nb:0.012 |

| | | | | | | | |
|---|---|---|---|---|---|---|---|
| Underlining indicates value outside scope of present disclosure. | | | | | | | |

The Ti content of the obtained samples, that is, the base steel sheets with the base film mainly composed of forsterite formed thereon, was measured according to the method specified in JIS G1223. The results are listed in Table 3. In this example, the Ti content does not change due to the formation of an insulating coating in a later process. Therefore, the table lists the measurement results as the Ti content in the grain-oriented electrical steel sheets.

On the base film of each of the steel sheets, an insulating coating consisting mainly of magnesium phosphate and silica was applied. For the samples obtained, that is, the grain-oriented electrical steel sheets each having the base film and the insulating coating formed in that order on the surface of the base steel sheet, the iron losses W_{17/50} and W_{18/50} (iron losses when magnetized to 1.7 T and 1.8 T, respectively, at 50 Hz) and hysteresis losses Wh₁₇ and Wh₁₈ (hysteresis losses when magnetized to 1.7 T and 1.8 T, respectively) were measured according to the method specified in JIS C2550-1. Then, R17, which is the ratio of the hysteresis loss Wh₁₇ to the iron loss W_{17/50}, and R18, which is the ratio of the hysteresis loss Wh₁₈ to the iron loss W_{18/50}, were calculated. The results are listed in Table 3.

Further, to measure the Ti content in each base steel sheet, a portion of the obtained samples were immersed in a 10 % hydrochloric acid aqueous solution at 80 °C for 180 s to remove the forsterite film and the insulating coating, and then measurement was carried out by the method specified in JIS G1223. The measurement results are listed in Table 3. The C content of the base steel sheet was measured in the same manner as in Example 1 and is listed in Table 3. The Ti content of the base steel sheet also does not change due to the formation of the insulating coating. The amounts of other elements in the base steel sheet were also measured by the same method as in Example 1 and by ICP emission spectroscopy, and it was confirmed that the amounts of Si, Mn, La, Ga, and other elements in the base steel sheet were the same as the content in the corresponding steel slab.

Next, a three-phase, three-leg model transformer was fabricated from each sample with the insulating coating, simulating a transformer having external dimensions of 500 mm square and sheet widths of 100 mm for each leg and yoke. Iron loss WT_{17/50} (transformer iron loss when magnetized up to 1.7 T at 50 Hz) of this model transformer was then measured. For each sample, the number of sheets stacked in the model transformer was 50, and the sheets were stacked in an alternating two-sheet arrangement.

From obtained results, the building factor F17 of the model transformer was then calculated as the model transformer iron loss WT_{17/50} divided by the sample iron loss W_{17/50} (WT_{17/50}/W_{17/50}). The results are listed in Table 3.

As is clear from the table, good iron loss properties are obtained under conditions within the ranges specified in the present disclosure.

### [Table 3]

**Table 3**

| No. | Base steel sheet | | | | Grain-oriented electrical steel sheet | | | | Building factor F17 (-) | Remarks |
|---|---|---|---|---|---|---|---|---|---|---|
| | C content (mass%) | La content (mass%) | Ti content (mass%) | Ga content (mass%) | Ti content (mass%) | R17 (-) | R18 (- ) | R18/R17 (-) | | |
| 5 | 0.0016 | 0.0040 | 0.0019 | - | 0.1210 | 0.41 | 0.49 | 1.20 | 1.25 | Example |
| 6 | 0.0062 | 0.0160 | 0.0022 | - | 0.1310 | 0.42 | 0.68 | 1.62 | 1.44 | Comparative Example |
| 7 | 0.0014 | 0.0010 | 0.0003 | - | 0.1260 | 0.46 | 0.70 | 1.52 | 1.35 | Comparative Example |
| 8 | 0.0016 | 0.0040 | 0.0021 | - | 0.0480 | 0.44 | 0.74 | 1.68 | 1.37 | Comparative Example |
| 9 | 0.0016 | 0.0190 | 0.0009 | - | 0.0900 | 0.39 | 0.62 | 1.59 | 1.47 | Comparative Example |
| 10 | 0.0024 | 0.0160 | 0.0013 | - | 0.1040 | 0.42 | 0.68 | 1.62 | 1.43 | Comparative Example |
| 11 | 0.0013 | 0.0000 | 0.0011 | - | 0.0780 | 0.44 | 0.70 | 1.59 | 1.37 | Comparative Example |
| 12 | 0.0028 | 0.0220 | 0.0028 | - | 0.0470 | 0.46 | 0.71 | 1.54 | 1.41 | Comparative Example |
| 13 | 0.0018 | 0.0030 | 0.0011 | 0.00004 | 0.0970 | 0.36 | 0.37 | 1.02 | 1.19 | Example |
| 14 | 0.0023 | 0.0160 | 0.0018 | 0.0052 | 0.1490 | 0.46 | 0.51 | 1.10 | 1.25 | Example |
| 15 | 0.0013 | 0.0150 | 0.0018 | - | 0.0040 | 0.40 | 0.61 | 1.53 | 1.45 | Comparative Example |
| 16 | 0.0014 | 0.0190 | 0.0021 | - | 0.0250 | 0.35 | 0.36 | 1.04 | 1.19 | Example |
| 17 | 0.0015 | 0.0080 | 0.0035 | - | 0.1240 | 0.38 | 0.41 | 1.09 | 1.29 | Example |
| 18 | 0.0026 | 0.0150 | 0.0016 | - | 0.0930 | 0.37 | 0.43 | 1.16 | 1.28 | Example |
| 19 | 0.0024 | 0.0130 | 0.0017 | - | 0.0370 | 0.35 | 0.41 | 1.17 | 1.29 | Example |
| 20 | 0.0028 | 0.0030 | 0.0004 | - | 0.1050 | 0.42 | 0.47 | 1.12 | 1.29 | Example |
| 21 | 0.0026 | 0.0180 | 0.0026 | - | 0.0610 | 0.39 | 0.40 | 1.02 | 1.25 | Example |
| 22 | 0.0016 | 0.0060 | 0.0005 | - | 0.0910 | 0.44 | 0.45 | 1.02 | 1.20 | Example |
| 23 | 0.0018 | 0.0130 | 0.0020 | - | 0.0790 | 0.46 | 0.50 | 1.08 | 1.17 | Example |
| 24 | 0.0017 | 0.0011 | 0.0030 | - | 0.0360 | 0.48 | 0.48 | 1.00 | 1.23 | Example |
| 25 | 0.0011 | 0.0190 | 0.0006 | - | 0.0200 | 0.42 | 0.43 | 1.02 | 1.23 | Example |
| 26 | 0.0026 | 0.0040 | 0.0025 | - | 0.0050 | 0.35 | 0.36 | 1.02 | 1.22 | Example |
| 27 | 0.0020 | 0.0100 | 0.0013 | - | 0.0180 | 0.35 | 0.37 | 1.07 | 1.25 | Example |
| 28 | 0.0027 | 0.0120 | 0.0035 | - | 0.1340 | 0.46 | 0.49 | 1.07 | 1.20 | Example |
| 29 | 0.0028 | 0.0150 | 0.0009 | - | 0.0050 | 0.45 | 0.70 | 1.55 | 1.42 | Comparative Example |
| 30 | 0.0022 | 0.0100 | 0.0023 | - | 0.0130 | 0.46 | 0.74 | 1.61 | 1.43 | Comparative Example |
| Underlining indicates value outside scope of present disclosure. | | | | | | | | | | |

| No. | Base steel sheet | | | | Grain-oriented electrical steel sheet | | | | Building factor F17 (-) | Remarks |
|---|---|---|---|---|---|---|---|---|---|---|
| | C content (mass%) | La content (mass%) | Ti content (mass%) | Ga content (mass%) | Ti content (mass%) | R17 (-) | R18 (- ) | R18/R17 (-) | | |
| 31 | 0.0020 | 0.0100 | 0.0005 | - | 0.0520 | 0.47 | 0.49 | 1.05 | 1.20 | Example |
| 32 | 0.0013 | 0.0070 | 0.0029 | - | 0.0360 | 0.41 | 0.45 | 1.09 | 1.18 | Example |
| 33 | 0.0017 | 0.0170 | 0.0009 | - | 0.1290 | 0.46 | 0.46 | 1.01 | 1.21 | Example |
| 34 | 0.0013 | 0.0060 | 0.0006 | - | 0.0810 | 0.38 | 0.40 | 1.06 | 1.21 | Example |
| 35 | 0.0017 | 0.0120 | 0.0027 | - | 0.0160 | 0.46 | 0.49 | 1.06 | 1.16 | Example |
| 36 | 0.0012 | 0.0190 | 0.0010 | - | 0.0300 | 0.41 | 0.46 | 1.12 | 1.22 | Example |
| 37 | 0.0018 | 0.0090 | 0.0004 | - | 0.1260 | 0.36 | 0.37 | 1.02 | 1.21 | Example |
| 38 | 0.0012 | 0.0070 | 0.0024 | - | 0.0700 | 0.36 | 0.38 | 1.06 | 1.17 | Example |
| 39 | 0.0018 | 0.0190 | 0.0014 | - | 0.1210 | 0.41 | 0.43 | 1.04 | 1.25 | Example |
| 40 | 0.0022 | 0.0040 | 0.0023 | 0.0004 | 0.1340 | 0.41 | 0.42 | 1.02 | 1.20 | Example |
| 41 | 0.0013 | 0.0030 | 0.0007 | 0.0048 | 0.0230 | 0.44 | 0.48 | 1.09 | 1.20 | Example |
| 42 | 0.0017 | 0.0120 | 0.0020 | 0.0007 | 0.0380 | 0.46 | 0.48 | 1.04 | 1.16 | Example |
| 43 | 0.0028 | 0.0200 | 0.0016 | 0.0012 | 0.0200 | 0.36 | 0.37 | 1.04 | 1.19 | Example |
| 44 | 0.0019 | 0.0040 | 0.0015 | 0.0009 | 0.1200 | 0.48 | 0.51 | 1.07 | 1.17 | Example |
| 45 | 0.0027 | 0.0020 | 0.0014 | 0.0017 | 0.0220 | 0.43 | 0.46 | 1.08 | 1.16 | Example |
| 46 | 0.0017 | 0.0080 | 0.0014 | 0.0037 | 0.0550 | 0.40 | 0.45 | 1.12 | 1.26 | Example |
| 47 | 0.0026 | 0.0180 | 0.0007 | 0.0030 | 0.0140 | 0.44 | 0.49 | 1.12 | 1.29 | Example |
| 48 | 0.0026 | 0.0190 | 0.0025 | 0.0027 | 0.1190 | 0.44 | 0.48 | 1.10 | 1.15 | Example |
| 49 | 0.0025 | 0.0080 | 0.0015 | 0.0034 | 0.0590 | 0.44 | 0.48 | 1.08 | 1.16 | Example |
| 50 | 0.0018 | 0.0020 | 0.0020 | 0.0026 | 0.0650 | 0.47 | 0.51 | 1.09 | 1.11 | Example |
| 51 | 0.0013 | 0.0160 | 0.0011 | 0.0038 | 0.0270 | 0.37 | 0.37 | 1.00 | 1.12 | Example |
| 52 | 0.0023 | 0.0020 | 0.0020 | 0.0026 | 0.0960 | 0.46 | 0.51 | 1.11 | 1.15 | Example |
| 53 | 0.0025 | 0.0130 | 0.0020 | 0.0007 | 0.0210 | 0.44 | 0.47 | 1.07 | 1.11 | Example |
| 54 | 0.0014 | 0.0120 | 0.0026 | 0.0047 | 0.0820 | 0.47 | 0.52 | 1.11 | 1.25 | Example |
| 55 | 0.0014 | 0.0010 | 0.0017 | 0.0037 | 0.0860 | 0.45 | 0.46 | 1.03 | 1.12 | Example |
| 56 | 0.0022 | 0.0130 | 0.0015 | 0.0002 | 0.1100 | 0.46 | 0.47 | 1.02 | 1.12 | Example |
| 57 | 0.0011 | 0.0080 | 0.0008 | 0.0028 | 0.0830 | 0.37 | 0.37 | 1.00 | 1.11 | Example |
| 58 | 0.0027 | 0.0010 | 0.0028 | 0.0030 | 0.0650 | 0.47 | 0.50 | 1.07 | 1.12 | Example |
| 59 | 0.0007 | 0.0050 | 0.0029 | 0.0027 | 0.1210 | 0.46 | 0.48 | 1.04 | 1.11 | Example |
| 60 | 0.0017 | 0.0190 | 0.0028 | 0.0004 | 0.0390 | 0.36 | 0.40 | 1.10 | 1.18 | Example |
| 61 | 0.0007 | 0.0160 | 0.0005 | 0.0004 | 0.1260 | 0.43 | 0.46 | 1.07 | 1.20 | Example |
| 62 | 0.0005 | 0.0030 | 0.0010 | 0.0021 | 0.1300 | 0.42 | 0.44 | 1.05 | 1.12 | Example |
| 63 | 0.0017 | 0.0170 | 0.0023 | 0.0008 | 0.0310 | 0.39 | 0.41 | 1.05 | 1.17 | Example |
| 64 | 0.0010 | 0.0110 | 0.0008 | 0.0042 | 0.0970 | 0.46 | 0.49 | 1.06 | 1.17 | Example |
| 65 | 0.0011 | 0.0040 | 0.0026 | 0.0011 | 0.1080 | 0.41 | 0.41 | 1.00 | 1.11 | Example |

## Claims

1. A grain-oriented electrical steel sheet comprising: a base steel sheet having a chemical composition, in mass%, containing C: 0.0050 % or less, Si: 1.5 % to 8.0 %, Mn: 0.02 % to 1.00 %, and La: 0.0001 % to 0.0200 %, with the balance being Fe and inevitable impurity; and a base film mainly composed of forsterite and an insulating coating in this order on the surface of the base steel sheet, wherein
Ti content in the grain-oriented electrical steel sheet is 0.0050 mass% to 0.1500 mass%, and
the following expression (1) is satisfied, where R17 is a ratio Wh₁₇/W_{17/50} of hysteresis loss Wh₁₇ to iron loss W_{17/50} when magnetized to 1.7 T and R18 is a ratio Wh₁₈/W_{18/50} of hysteresis loss Wh₁₈ to iron loss W_{18/50} when magnetized to 1.8 T, $R 18 / R 17 \leq 1.50$

2. The grain-oriented electrical steel sheet according to claim 1, wherein Ti content of the base steel sheet is 0.0030 mass% or less.

3. The grain-oriented electrical steel sheet according to claim 1 or 2, wherein the base steel sheet further contains Ga: 0.0001 mass% to 0.0050 mass%.

4. The grain-oriented electrical steel sheet according to any one of claims 1 to 3, wherein the base steel sheet further contains one or more selected from the group consisting of Sn: 0.500 mass% or less, Cr: 0.500 mass% or less, Cu: 0.50 mass% or less, Ni: 0.50 mass% or less, Bi: 0.500 mass% or less, P: 0.500 mass% or less, Sb: 0.500 mass% or less, Mo: 0.500 mass% or less, B: 25.0 mass ppm or less, Nb: 0.020 mass% or less, V: 0.020 mass% or less, As: 0.0200 mass% or less, Zn: 0.020 mass% or less, Pb: 0.0100 mass% or less, W: 0.0500 mass% or less, Co: 0.050 mass% or less, and Ge: 0.0050 mass% or less.
